# FASCICULE DE BREVET EUROPEEN

(11) **EP 3 945 518 B1**
(45) Date de publication et mention de la délivrance du brevet: **28.02.2024**
(21) Numéro de dépôt: 21183530.1
(22) Date de dépôt: 02.07.2021
(51) Int. Cl.: G10K 11/168, F02C 7/045, F02K 1/82

(54) **MATÉRIAU ACOUSTIQUE EN BANDE À BRIDE INTÉGRÉE, ET PAROI INTERNE D'UNE ENTRÉE D`AIR D`AÉRONEF RÉALISÉE AVEC CE MATÉRIAU**
AKUSTIKMATERIAL AUS STREIFEN MIT INTEGRIERTEM FLANSCH UND INNENWAND EINES LUFTEINLASSES EINES LUFTFAHRZEUGS AUS DIESEM MATERIAL
ACOUSTIC MATERIAL IN STRIPS WITH INTEGRATED FLANGE AND INTERNAL WALL OF AN AIR INTAKE OF AN AIRCRAFT MADE USING SAID MATERIAL

(30) Priorité: 31.07.2020 FR 2008163
(43) Date de publication de la demande: 02.02.2022
(73) Titulaire: AIRBUS OPERATIONS (S.A.S.), 31060 Toulouse (FR)
(72) Inventeur: LALANE, Jacques, 31060 TOULOUSE (FR); PORTE, Alain, 31060 TOULOUSE (FR)
(74) Mandataire: Sarraméa, Claude

(56) Documents cités:
- US-A1- 2004 045 766
- US-A1- 2014 077 031
- US-A1- 2020 017 191
- US-A1- 2020 101 681
- US-A1- 2020 102 084
- US-B2- 7 866 939

## Description

La présente demande concerne un matériau acoustique en bande et une peau résistive fabriquée à partir de ce matériau. L'invention s'applique plus particulièrement à la fabrication de la paroi interne de l'entrée d'air des nacelles d'aéronef.

Des exemples de matériaux acoustiques connus sont décrits dans les documents US 2014/077031 A1, US 7 866 939 B2, US 2020/101681 A1, US 2020/017191 A1.

Il est rappelé qu'une nacelle d'aéronef comprend, de l'avant vers l'arrière, un premier tronçon en amont du flux aérodynamique, appelé entrée d'air, un deuxième tronçon qui recouvre le carter de la soufflante moteur, appelé capot de soufflante, et un troisième tronçon qui présente généralement une zone d'inversion de poussée qui entoure le corps de turbine du moteur à l'aval du flux aérodynamique.

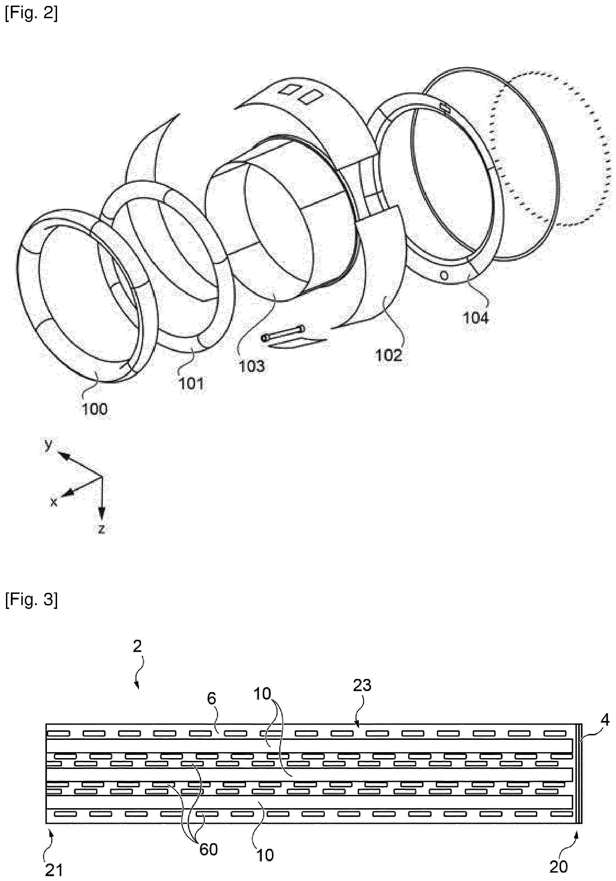

Une entrée d'air, telle celle illustrée à la figure 2 annexée, comprend usuellement des éléments de structure tels qu'un cadre avant 101 et un cadre arrière 104, ainsi que, de l'avant vers l'arrière de la nacelle, une lèvre 100, des panneaux externes 102 prolongeant la lèvre à l'extérieur de la nacelle (et formant une paroi externe de l'entrée d'air), une paroi interne 103 prolongeant la lèvre à l'intérieur de la nacelle et délimitant un conduit central permettant de canaliser l'air en direction du moteur, les panneaux externes et la paroi interne étant portés par le cadre avant 101 et le cadre arrière 104.

La forme de l'entrée d'air et les systèmes dont elle est équipée doivent permettre d'éviter la formation et/ou l'accumulation de glace ou givre, d'assurer une fonction aérodynamique, de prévenir la pénétration d'oiseaux dans le compartiment de soufflante contenant les systèmes moteurs, ainsi que de limiter l'impact des nuisances sonores. Pour remplir ce dernier objectif, la paroi interne 103 est une paroi à traitement acoustique, qui comprend usuellement :
- une peau résistive perforée ou micro-perforée qui forme la face visible de la paroi (face orientée vers l'intérieur du conduit central de l'entrée d'air) ; l'objectif de cette peau résistive est de laisser passer les ondes sonores et éventuellement aussi de dissiper, au moins partiellement, l'énergie de celles-ci sous forme thermique,
- une peau arrière ayant essentiellement pour fonction d'assurer la tenue structurale de la paroi,
- une âme amortissante alvéolaire, généralement en nid d'abeilles, de part et d'autre de laquelle sont fixées la peau résistive et la peau arrière, laquelle âme participe à la fois à la tenue mécanique et à l'amortissement acoustique, la fonction principale de l'âme étant d'emprisonner et amortir les ondes sonores.

Deux techniques principales existent pour fabriquer la peau résistive de la paroi interne des entrées d'air et former cette paroi.

Selon une première technique, la peau résistive de la paroi interne de l'entrée d'air est composée de plusieurs (par exemple quatre à dix) panneaux rigides correspondant à des secteurs angulaires du conduit central de l'entrée d'air comme illustré sur la figure 2. La peau résistive de ces secteurs est une coque rigide obtenue par moulage et drapage.

L'outillage nécessaire à la fabrication d'une peau résistive comprenant plusieurs secteurs est complexe et onéreux compte tenu de la taille des secteurs et de la forme du conduit de l'entrée d'air. Aussi et surtout, en plus d'être fixés aux cadres avant 101 et arrière 104, les différents secteurs doivent être fixés entre eux à l'aide d'éclisses qui ont un impact négatif non négligeable sur la traînée.

Pour réduire les coûts de production et supprimer les éclisses, une seconde technique a été proposée consistant à fabriquer la peau résistive de la paroi interne de l'entrée d'air à l'aide d'une succession (selon la direction orbitale) de bandes longitudinales qui sont agencées côte à côte tout autour du conduit. L'extrémité avant de chaque bande de peau est fixée à un talon avant formant une bride circulaire qui permet de fixer le conduit obtenu au cadre avant de l'entrée d'air ; de façon analogue, l'extrémité arrière de chaque bande de peau est fixée à un talon arrière formant une bride circulaire permettant de fixer le conduit obtenu au cadre arrière de l'entrée d'air. Les bandes sont par ailleurs soudées entre elles le long de leurs bords longitudinaux pour former une peau continue sur toute la circonférence du conduit.

Les bandes de peau résistive connues peuvent être fabriquées au kilomètre à moindre coût et leur assemblage permet de donner au conduit la forme souhaitée. Elles ne nécessitent aucun éclissage et ne génèrent pas de traînée. Cette seconde technologie est donc intéressante.

Toutefois, l'utilisation des talons avant et arrière, sur lesquels sont fixées les extrémités des bandes, possède un inconvénient. Vu en coupe dans un plan longitudinal contenant l'axe central de l'entrée d'air, le talon arrière présente la forme d'une équerre ayant une première aile contenue dans un plan transversal (cette première aile forme une bride servant à la fixation du conduit au cadre arrière) et une seconde aile sur laquelle reposent et sont fixées les extrémités arrière des bandes, cette seconde aile s'étendant sensiblement selon la direction longitudinale sur toute la circonférence du conduit. Sur la largeur (dimension selon la direction longitudinale) de cette seconde aile, des perforations de la peau résistive sont bouchées par l'aile et aucun traitement acoustique n'est possible. Aucune âme amortissante (nid d'abeilles) n'est prévue au niveau des talons avant et arrière. La présence de ces talons, nécessaire à la fixation des bandes de peau résistive aux cardes avant et arrière de l'entrée d'air, réduit par conséquent la longueur (selon la direction longitudinale de l'entrée d'air) de traitement acoustique et s'ajoute de surcroît à la masse de l'entrée d'air.

L'invention vise à pallier ces inconvénients en proposant un nouveau matériau acoustique pour la fabrication de la paroi interne d'une entrée d'air, qui soit simple à produire à moindre coût, à l'échelle industrielle, et qui permette de fabriquer une paroi interne d'entrée d'air présentant une longueur de traitement acoustique augmentée. L'invention s'étend à un nouveau procédé de fabrication de la paroi interne d'une entrée d'air, particulièrement simple et conduisant à l'obtention d'une entrée d'air ayant une masse réduite et des performances acoustiques accrues.

A cette fin, l'invention propose un matériau acoustique en bande, pour la fabrication d'une peau résistive de paroi interne d'entrée d'air de nacelle d'aéronef, laquelle bande présente une longueur selon une direction longitudinale, une largeur selon une direction transversale, une épaisseur et des extrémités axiales. Le matériau selon l'invention est caractérisé en ce que, à au moins l'une des extrémités axiales de la bande, sur une portion extrême de sa longueur, la bande de matériau est repliée dans un plan sensiblement transversal.

L'invention s'étend à une paroi interne d'entrée d'air d'aéronef comprenant une peau résistive configurée pour laisser passer des ondes acoustiques et une âme alvéolaire configurée pour amortir lesdites ondes acoustiques caractérisée en ce que :
- la peau résistive est constituée par des bandes selon l'invention, en d'autres termes la peau résistive est constituée par une succession, selon une direction orbitale, de bandes de matériau acoustique s'étendant longitudinalement, chaque bande étant repliée dans un plan transversal vers l'extérieur de l'entrée d'air à au moins l'une de ses extrémités axiales, sur une portion extrême de la longueur de ladite bande, les portions extrêmes repliées des bandes formant une bride arrière ou avant permettant de fixer la peau résistive de la paroi interne d'entrée d'air à un cadre de l'entrée d'air,
- l'âme alvéolaire s'étend longitudinalement jusqu'à ladite bride arrière ou avant.

En d'autres termes, l'invention propose des bandes de peau résistive à bride de fixation intégrée. Cette caractéristique n'empêche pas la fabrication au kilomètre des bandes, à moindre coût. La présence de la bride de fixation intégrée permet en revanche de s'affranchir de l'utilisation des talons antérieurs connus, à au moins l'une des extrémités du conduit de l'entrée d'air. A cette extrémité du conduit, il est dès lors possible de prévoir que l'âme alvéolaire de la paroi acoustique s'étende jusqu'à la bride de fixation. Le conduit d'entrée d'air obtenu présente par conséquent une longueur de traitement acoustique accrue.

Selon une caractéristique possible de l'invention, chaque bande de peau résistive possède une portion extrême repliée à chacune de ses extrémités axiales. Dès lors, dans une entrée d'air selon l'invention, les portions extrêmes repliées des bandes utilisées pour constituer la peau résistive de la paroi interne forment à la fois une bride arrière permettant de fixer la peau résistive de la paroi interne de l'entrée d'air à un cadre arrière de l'entrée d'air et une bride avant permettant de fixer la peau résistive de la paroi interne de l'entrée d'air à un cadre avant de l'entrée d'air.

Selon une caractéristique possible, le matériau acoustique en bande selon l'invention comprend successivement, dans la direction de l'épaisseur de la bande :
- une première couche en un polymère renforcé de fibres, laquelle première couche comporte des perforations ou micro-perforations,
- une deuxième couche constituée par un tissu métallique (*wiremesh* en anglais) ou une tôle fine, métallique ou en matériau thermoplastique.

La deuxième couche peut présenter une épaisseur faible, de préférence comprise entre 0,05 mm et 0,2 mm.

La première couche et la deuxième couche peuvent être indifféremment situées du côté du conduit interne de l'entrée d'air ou être en contact avec le flux aérodynamique. Si la première couche est destinée à former la face aérodynamique de la peau résistive de l'entrée d'air (et la deuxième couche la face interne de cette peau résistive), la ou les portions extrêmes repliées sont repliées du côté opposé à la première couche. Le contraire est également possible (la face aérodynamique est alors la deuxième couche et les portions extrêmes repliées le sont du côté opposé à la deuxième couche). Ou autrement dit, la ou les portions extrêmes repliées sont repliées du côté de la première couche.

Selon une caractéristique possible, outre les deux couches susmentionnées, le matériau en bande selon l'invention comprend une troisième couche formée de bandelettes en un polymère renforcé par des fibres, lesquelles bandelettes sont espacées les unes des autres selon la direction transversale de la bande de façon à former des créneaux de renfort longitudinaux, la première couche étant dépourvue de perforations ou micro-perforations en regard des bandelettes formant la troisième couche.

Selon une caractéristique possible, la première couche de la bande est dépourvue de perforations ou micro-perforations sur sa ou ses portions extrêmes repliées.

Dans ce mode de réalisation, il peut être prévu que la ou les portions extrêmes repliées soient dépourvues de troisième couche. En d'autres termes, dans une entrée d'air dont la paroi interne est fabriquée à l'aide de telles bandes, les créneaux de renfort longitudinaux s'arrêtent contre la ou les brides de fixation formées par les portions extrêmes repliées des bandes.

Selon une caractéristique possible, les bandes de matériau acoustique constituant la peau résistive de la paroi interne comprennent chacune :
- une première couche formant une face visible de la paroi interne de l'entrée d'air, laquelle première couche est en un polymère renforcé de fibres, la première couche étant perforée ou micro-perforée,
- une deuxième couche constituée par un tissu métallique,
- une troisième couche formée de bandelettes en un polymère renforcé de fibres, lesquelles bandelettes s'étendent principalement selon la direction longitudinale de la bande de matériau et sont espacées les unes des autres selon la direction transversale de la bande, les bandelettes formant ainsi des créneaux de renfort longitudinaux, la première couche étant dépourvue de perforations ou micro-perforations en regard desdites bandelettes. La ou les portions extrêmes repliées de la bande sont dépourvues de perforations ou micro-perforations dans la première couche et sont dépourvues de troisième couche.

L'invention s'étend à une nacelle d'aéronef comprenant une entrée d'air ayant une paroi interne selon l'invention. Elle s'étend aussi à un ensemble propulsif équipé d'une telle nacelle, et à un aéronef comprenant au moins un ensemble propulsif ainsi équipé.

Selon une caractéristique possible, le matériau en bande selon l'invention présente un soyage à chacun de ses bords longitudinaux facilitant l'assemblage de deux bandes qui se succèdent selon la direction orbitale de l'entrée d'air. Le soyage peut se prolonger dans la ou les portions extrêmes repliées des bandes c'est-à-dire selon une direction radiale de l'entrée d'air.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig. 1] La figure 1 est une vue en perspective d'un aéronef.
[Fig. 2] La figure 2 est une vue en perspective éclatée d'une entrée d'air de l'art antérieur.
[Fig. 3] La figure 3 est une vue de dessus d'un premier mode de réalisation d'une bande de matériau selon l'invention.
[Fig. 4] La figure 4 est une vue de profil de la bande de matériau de la figure 3.
[Fig. 5] La figure 5 est une vue de dessus d'un second mode de réalisation d'une bande de matériau selon l'invention.

Les éléments identiques représentés sur les figures précitées sont identifiés par des références numériques identiques.

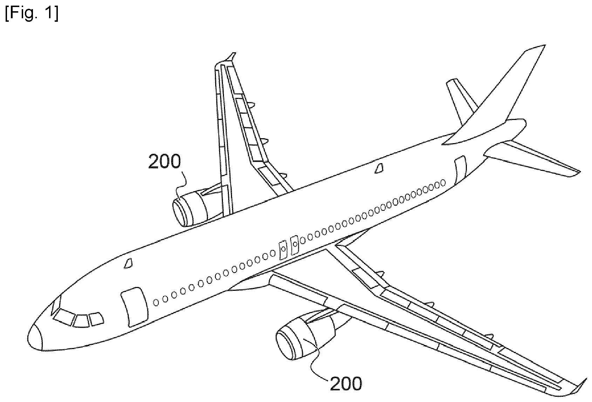

La figure 1 montre un aéronef biréacteur dont les deux nacelles 200 possèdent une entrée d'air susceptible d'être équipée d'une peau résistive réalisée à partir de bandes de matériau selon l'invention.

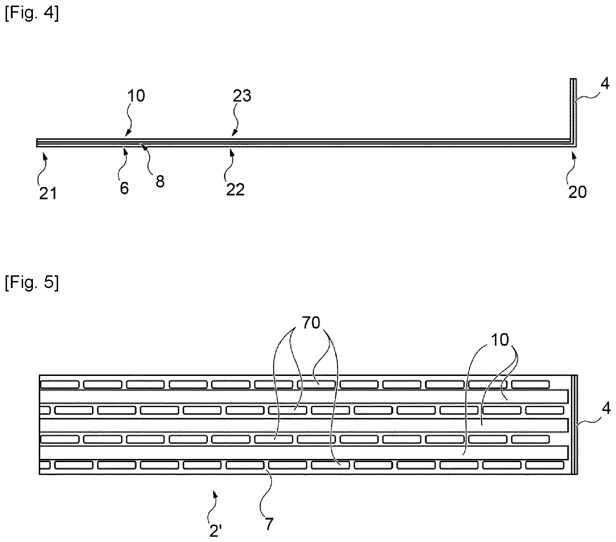

Les figures 3 et 4 montrent un premier mode de réalisation d'une bande de matériau selon l'invention. Le matériau présente la forme d'une bande 2 qui, en l'exemple, est multicouches, comprenant une première couche 6 en polymère renforcé de fibres, c'est-à-dire une couche de fibres noyées dans une résine polymérisée. Les fibres peuvent être choisies parmi les fibres de carbone, de verre, de kevlar, etc., tandis que le polymère peut être choisi parmi les résines thermoplastiques dont les résines de la famille des polyetherethercetones (PEEK) et les résines de la famille des polyetherimides (PEI).

Cette première couche 6 s'étend sur toute la superficie de la bande de matériau ; elle détermine les dimensions frontales (largeur et longueur) de ladite bande. La première couche 6 forme également une première face frontale 22 de la bande, destinée à être la face visible d'une paroi interne d'entrée d'air d'aéronef et à être en contact avec un flux aérodynamique.

La première couche 6 comporte des micro-perforations 60 oblongues, en l'exemple rectangulaires (en vue de dessus), qui s'étendent principalement selon la direction longitudinale de la bande. A titre illustratif, ces micro-perforations présentent une largeur comprise entre 0,15 mm et 0,5 mm, de préférence entre 0,3 mm et 0,4 mm, et une longueur comprise entre 2 mm et 12 mm, de préférence entre 3 mm et 5 mm.

La bande de matériau 2 comprend de plus un tissu métallique 8, qui forme une deuxième couche recouvrant intégralement la première couche. Cette deuxième couche participe à l'amortissement des ondes acoustiques (notamment par dissipation thermique) et permet donc de réduire la traînée en limitant les perforations nécessaires dans la première couche. Les dimensions des perforations de la première couche 6 et les caractéristiques du tissu métallique 8 (diamètre de fil, taille des mailles, etc) sont avantageusement choisies de façon à ce que le taux de surface ouverte (TSO) des deux premières couches assemblées soit de l'ordre de 22-23%, le TSO étant le rapport entre la la surface ouverte (superficie totale des perforations) sur la surface de la bande hors portions repliées, c'est-à-dire le pourcentage de surface ouverte (superficie des perforations) par unité de surface de peau (hors portions repliées).

La bande comprend enfin une troisième couche constituée de bandelettes 10 qui forment des créneaux de renfort longitudinaux sur la seconde face frontale 23 de la bande. Ces bandelettes 10 sont de préférence en polymère renforcé de fibres, dont les fibres et la résine polymérique sont choisies parmi les familles listées précédemment concernant la première couche 6. Les bandelettes 10 sont ainsi par exemple en fibres de carbone imprégnées d'une résine PEI. En variante, les bandelettes peuvent être métalliques, par exemple en titane ou en acier inoxydable. Elles peuvent de plus être recouvertes d'un revêtement de surface favorisant leur adhésion à la deuxième couche 8 et/ou à la première couche 6.

La première couche 6 et la troisième couche peuvent être réalisées dans le même polymère renforcé de fibres, avec des fibres qui s'étendent selon la ou les mêmes directions.

En variante, les fibres de la première couche 6 sont essentiellement orientées selon la direction longitudinale de la bande afin de reprendre les efforts axiaux auxquels la bande (ou la paroi interne de l'entrée d'air) est soumise, tandis que les fibres de la troisième couche sont orientées selon la direction transversale de la bande afin de reprendre les efforts orbitaux et radiaux auxquels la paroi interne d'entrée d'air est soumise.

De préférence, la première couche 6 est dépourvue de micro-perforations 60 au regard des bandelettes de renfort 10. En effet, prévoir des trous en regard des bandelettes serait sans effet au plan acoustique (les trous étant bouchés par les bandelettes) et ajouterait donc inutilement à la traînée.

Selon l'invention, la bande de matériau 2 présente une portion extrême 4 repliée dans un plan transversal, à au moins l'une de ses extrémités (ici l'extrémité 20). Dans l'exemple illustré, l'autre extrémité 21 de la bande n'est pas repliée, mais il est possible de prévoir aussi à cette extrémité une portion repliée.

De préférence, comme illustré, le tissu métallique 8 recouvre entièrement la première couche 6, sur toute la longueur de la bande 2, y compris dans la portion extrême repliée 4 afin de rigidifier cette dernière (et la bride de fixation obtenue lorsque des bandes sont assemblées pour former une paroi interne d'entrée d'air). Il peut être choisi, en variante, de recouvrir la première couche avec le tissu métallique à l'exception de la portion extrême repliée 4.

En revanche, de préférence, la troisième couche (bandelettes de renfort 10) ne recouvre pas la portion extrême repliée 4 afin de faciliter le pliage de cette portion.

La figure 5 illustre un second mode de réalisation d'une bande de matériau selon l'invention. Cette bande 2' se distingue de la bande 2 uniquement en ce que la première couche 7, qui peut être similaire à la première couche 6 précédemment décrite en termes de matériau, est pourvue de perforations 70 oblongues, par exemple rectangulaires ou elliptiques, en lieu et place des micro-perforations 60. Ces perforations oblongues ont avantageusement une largeur comprise entre 1 mm et 3 mm, de préférence entre 1,5 mm et 2 mm, et une longueur comprise entre 10 mm et 40 mm, de préférence entre 20 mm et 30 mm. Là encore, aucune perforation n'est prévue dans la première couche 7 en regard des bandelettes 10.

La vue de profil de ce second mode de réalisation est identique à celle du premier mode de réalisation et peut donc être observée à la figure 4.

Un tel matériau en bande peut aisément être produit au kilomètre.

Pour ce faire par exemple :
- on utilise :
   - un premier ruban de polymère renforcé par des fibres correspondant à la première couche, conditionné en un premier rouleau,
      un « deuxième » ruban de tissu métallique conditionné en un deuxième rouleau, le premier et le deuxième ruban ayant une largeur identique correspondant à la largeur de la bande à fabriquer,
   - un « troisième » ruban de polymère renforcé par des fibres correspondant à la troisième couche, conditionné en un troisième rouleau, dont la largeur correspond à la largeur de trois bandelettes 10,
- le deuxième ruban est plaqué sur le premier ruban au fur et à mesure que ceux-ci sont déroulés, puis les deux rubans superposés sont fixés l'un à l'autre sur toute leur largeur, au fur et à mesure de leur défilement, dans un premier poste de soudure à ultrasons ;
- le troisième ruban passe dans un poste de découpe au fur et à mesure qu'il est déroulé, pour être découpé en bandelettes, et les bandelettes en défilement sont positionnées sur les deux premiers rubans en défilement à la sortie du premier poste de soudure à ultrasons ;
- l'ensemble passe dans un deuxième poste de soudure à ultrasons comprenant trois sonotrodes pour la fixation des trois bandelettes 10 sur le deuxième ruban ;
- à intervalles réguliers, la progression du troisième ruban est stoppée pour laisser une longueur de bande, correspondant à la longueur de la portion extrême repliée 4, dépourvue de bandelettes de renfort 10, la longueur de la portion de bande pourvue de bandelettes créée entre deux portions dépourvues de bandelettes correspondant à la longueur du conduit de l'entrée d'air à fabriquer.

La bande au kilomètre obtenue est ensuite découpée en bandes individuelles, à l'une des extrémités des bandelettes (par exemple à l'extrémité amont des bandelettes, dans le sens de défilement des rubans).

Si l'on souhaite créer des bandes de matériau individuelles comportant deux portions extrêmes repliées, il suffit de prévoir, dans la bande au kilomètre, des portions sans bandelettes deux fois plus longues et de découper la bande au kilomètre au milieu de chacune de ces portions sans bandelettes.

Chaque bande individuelle est ensuite pliée sur une ligne de pliure correspondant à la jonction entre les portions respectivement pourvue et dépourvue de bandelettes 10.

Pour réaliser la paroi interne d'une entrée d'air, on assemble des bandes de matériau 2 agencées côte à côte sur un moule ayant la forme d'un secteur angulaire du conduit d'entrée d'air à fabriquer. Les bords longitudinaux adjacents de deux bandes successives selon la direction orbitale sont soudés entre eux à l'aide d'un sonotrode, y compris au niveau de leur portion extrême repliée 4. L'opération est réitérée de façon à former toute la circonférence du conduit. Les portions extrêmes repliées de toutes les bandes assemblées forment alors une bride circulaire s'étendant dans un plan transversal (orthogonal à l'axe central de l'entrée d'air) permettant de fixer le conduit à un cadre de l'entrée d'air.

A noter que, dans la paroi interne de l'entrée d'air, l'angle que forme chaque bande entre sa portion extrême repliée et la portion principale (le reste) de la bande n'est pas nécessairement un angle droit au niveau de la pliure. En effet, lors de la fabrication de la paroi interne (ou préalablement), la portion principale de chaque bande, qui est plate sur les figures annexées, est mise en forme de façon à présenter une ou plusieurs courbures selon la direction longitudinale de la bande (c'est-à-dire selon l'axe X de l'entrée d'air). Mais toutes les bandes utilisées ont le même angle afin que les portions extrêmes repliées 4 se retrouvent dans un seul et même plan, transversal (c'est-à-dire orthogonal à l'axe X de l'entrée d'air), lorsque les bandes sont assemblées.

L'invention n'est pas limitée à ces exemples et s'étend à toutes les variantes entrant dans le cadre des revendications annexées. Ainsi par exemple, le matériau en bande n'est pas nécessairement composé des trois couches décrites ci-avant.

## Revendications

1. Paroi interne d'entrée d'air d'aéronef comprenant une peau résistive configurée pour laisser passer des ondes acoustiques et une âme alvéolaire configurée pour amortir lesdites ondes acoustiques, **caractérisée en ce que** la peau résistive est constituée par une succession, selon une direction orbitale, de bandes (2) de matériau acoustique (2), chaque bande (2) présentant une longueur selon une direction longitudinale, une largeur selon une direction transversale, une épaisseur et des extrémités axiales (20, 21), chaque bande (2) de matériau étant repliée dans un plan sensiblement transversal à au moins l'une (20) des extrémités axiales de la bande, sur une portion extrême (4) de la longueur de la bande, les portions extrêmes repliées (4) des bandes formant une bride arrière ou avant permettant de fixer la peau résistive de la paroi interne d'entrée d'air à un cadre de l'entrée d'air.

2. Paroi interne d'entrée d'air d'aéronef selon la revendication 1 **caractérisée en ce que** les bandes de matériau acoustique (2) constituant la peau résistive sont repliées dans un plan transversal à chacune de leurs extrémités axiales (20, 21), les portions extrêmes repliées (4) desdites bandes formant à la fois une bride arrière permettant de fixer la peau résistive de la paroi interne à un cadre arrière (104) de l'entrée d'air et une bride avant permettant de fixer la peau résistive de la paroi interne à un cadre avant (101) de l'entrée d'air.

3. Paroi interne d'entrée d'air d'aéronef l'une des revendications 1 ou 2, **caractérisée en ce que** le matériau acoustique comprend successivement, dans la direction de l'épaisseur de la bande (2) :
- une première couche (6) en un polymère renforcé de fibres, laquelle première couche est perforée ou micro-perforée,
- une deuxième couche (8) constituée d'un tissu métallique ou d'une tôle fine métallique ou en matériau thermoplastique.

4. Paroi interne d'entrée d'air d'aéronef selon la revendication 3, **caractérisée en ce que** les bandes de matériau acoustique (2) constituant la peau résistive de la paroi interne comprennent chacune :
- une première couche (6) formant une face visible de la paroi interne de l'entrée d'air, laquelle première couche est en un polymère renforcé de fibres, la première couche étant perforée ou micro-perforée,
- une deuxième couche (8) constituée par un tissu métallique,
- une troisième couche formée de bandelettes (10) en un polymère renforcé de fibres, lesquelles bandelettes s'étendent principalement selon la direction longitudinale de la bande de matériau et sont espacées les unes des autres selon la direction transversale de la bande, les bandelettes (10) formant ainsi des créneaux de renfort longitudinaux, la première couche (6) étant dépourvue de perforations (70) ou micro-perforations (60) en regard desdites bandelettes,
et **en ce que** la ou les portions extrêmes repliées (4) de la bande sont dépourvues de perforations (70) ou micro-perforations (60) dans la première couche (6) et sont dépourvues de troisième couche (10).

5. Paroi interne selon l'une des revendications 3 ou 4, **caractérisée en ce que** la ou les portions extrêmes repliées (4) sont repliées du côté opposé à la première couche (6).

6. Paroi interne selon l'une des revendications 3 ou 4, **caractérisée en ce que** la ou les portions extrêmes repliées (4) sont repliées du côté de la première couche (6).

7. Paroi interne selon l'une des revendications 3 à 6, **caractérisée en ce que** la première couche (6) de la bande est dépourvue de perforations (70) ou micro-perforations (60) sur sa ou ses portions extrêmes repliées (4).

8. Nacelle d'aéronef comprenant une entrée d'air ayant une paroi interne selon l'une des revendications 1 à 7.

9. Ensemble propulsif d'aéronef comprenant une nacelle selon la revendication 8.

10. Aéronef comprenant au moins un ensemble propulsif selon la revendication 9.

## Patentansprüche

1. Innenwand eines Lufteinlasses eines Luftfahrzeugs, welche eine resistive Haut, die dafür ausgelegt ist, Schallwellen durchzulassen, und einen Wabenkern, der dafür ausgelegt ist, die Schallwellen zu dämpfen, umfasst, **dadurch gekennzeichnet, dass** die resistive Haut aus einer Folge, in einer Umlaufrichtung, von Streifen (2) aus akustischem Material (2) besteht, wobei jeder Streifen (2) eine Länge in einer Längsrichtung, eine Breite in einer Querrichtung, eine Dicke und axiale Enden (20, 21) aufweist, wobei jeder Streifen (2) von Material an mindestens einem (20) der axialen Enden des Streifens auf einem Endabschnitt (4) der Länge des Streifens in eine im Wesentlichen quer verlaufende Ebene umgebogen ist, wobei die umgebogenen Endabschnitte (4) der Streifen einen hinteren oder vorderen Flansch bilden, der es ermöglicht, die resistive Haut der Innenwand des Lufteinlasses an einem Rahmen des Lufteinlasses zu befestigen.

2. Innenwand eines Lufteinlasses eines Luftfahrzeugs nach Anspruch 1, **dadurch gekennzeichnet, dass** die Streifen aus akustischem Material (2), welche die resistive Haut bilden, an jedem ihrer axialen Enden (20, 21) in eine Querebene umgebogen sind, wobei die umgebogenen Endabschnitte (4) der Streifen gleichzeitig einen hinteren Flansch, der es ermöglicht, die resistive Haut der Innenwand an einem hinteren Rahmen (104) des Lufteinlasses zu befestigen, und einen vorderen Flansch, der es ermöglicht, die resistive Haut der Innenwand an einem vorderen Rahmen (101) des Lufteinlasses zu befestigen, bilden.

3. Innenwand eines Lufteinlasses eines Luftfahrzeugs nach einem der Ansprüche 1 oder 2, **dadurch gekennzeichnet, dass** das akustische Material in der Richtung der Dicke des Streifens (2) aufeinanderfolgend umfasst:
- eine erste Schicht (6) aus einem faserverstärkten Polymer, wobei diese erste Schicht perforiert oder mikroperforiert ist,
- eine zweite Schicht (8), die aus einem Metallgewebe oder einem dünnen Metallblech oder aus thermoplastischem Material besteht.

4. Innenwand eines Lufteinlasses eines Luftfahrzeugs nach Anspruch 3, **dadurch gekennzeichnet, dass** die Streifen aus akustischem Material (2), welche die resistive Haut der Innenwand bilden, jeweils umfassen:
- eine erste Schicht (6), die eine sichtbare Fläche der Innenwand des Lufteinlasses bildet, wobei diese erste Schicht aus einem faserverstärkten Polymer besteht, wobei die erste Schicht perforiert oder mikroperforiert ist,
- eine zweite Schicht (8), die aus einem Metallgewebe besteht,
- eine dritte Schicht (10), die von Bändchen aus einem faserverstärkten Polymer gebildet wird, wobei sich diese Bändchen hauptsächlich in der Längsrichtung des Materialstreifens erstrecken und voneinander in der Querrichtung des Streifens beabstandet sind, wobei die Bändchen (10) auf diese Weise längs verlaufende Verstärkungsrippen bilden, wobei die erste Schicht (6) gegenüber diesen Bändchen nicht mit Perforationen (70) oder Mikroperforationen (60) versehen ist,
und dadurch, dass die umgebogenen Endabschnitte (4) des Streifens nicht mit Perforationen (70) oder Mikroperforationen (60) in der ersten Schicht (6) versehen sind und nicht mit einer dritten Schicht (10) versehen sind.

5. Innenwand nach einem der Ansprüche 3 oder 4, **dadurch gekennzeichnet, dass** der oder die umgebogenen Endabschnitte (4) nach der Seite umgebogen sind, die der ersten Schicht (6) gegenüberliegt.

6. Innenwand nach einem der Ansprüche 3 oder 4, **dadurch gekennzeichnet, dass** der oder die umgebogenen Endabschnitte (4) nach der Seite der ersten Schicht (6) umgebogen sind.

7. Innenwand nach einem der Ansprüche 3 bis 6, **dadurch gekennzeichnet, dass** die erste Schicht (6) des Streifens auf ihrem oder ihren umgebogenen Endabschnitt(en) (4) nicht mit Perforationen (70) oder Mikroperforationen (60) versehen ist.

8. Luftfahrzeuggondel, welche einen Lufteinlass umfasst, der eine Innenwand nach einem der Ansprüche 1 bis 7 aufweist.

9. Antriebseinheit eines Luftfahrzeugs, welche eine Gondel nach Anspruch 8 umfasst.

10. Luftfahrzeug, welches mindestens eine Antriebseinheit nach Anspruch 9 umfasst.

## Claims

1. Aircraft air intake internal wall comprising a resistive skin configured to allow acoustic waves to pass through and a cellular core configured to damp said acoustic waves, **characterized in that** the resistive skin is made up of a succession, in an orbital direction, of strips (2) of acoustic material (2), each strip (2) having a length in a longitudinal direction, a width in a transverse direction, a thickness and axial ends (20, 21), each strip (2) of material being folded in a substantially transverse plane at at least one (20) of the axial ends of the strip, in an end portion (4) of the length of the strip, the folded end portions (4) of the strips forming a rear or front flange for fastening the resistive skin of the air intake internal wall to a frame of the air intake.

2. Aircraft air intake internal wall according to Claim 1, **characterized in that** the strips of acoustic material (2) making up the resistive skin are folded in a plane transverse to each of their axial ends (20, 21), the folded end portions (4) of said strips forming both a rear flange for fastening the resistive skin of the internal wall to a rear frame (104) of the air intake and a front flange for fastening the resistive skin of the internal wall to a front frame (101) of the air intake.

3. Aircraft air intake internal wall according to either of Claims 1 and 2, **characterized in that** the acoustic material comprises successively, in the direction of the thickness of the strip (2):
- a first layer (6) made of a fibre-reinforced polymer, said first layer being perforated or micro-perforated,
- a second layer (8) made up of a metal fabric or of a thin metal sheet or a thin sheet made of thermoplastic material.

4. Aircraft air intake internal wall according to Claim 3, **characterized in that** the strips of acoustic material (2) making up the resistive skin of the internal wall each comprise:
- a first layer (6) forming a visible face of the air intake internal wall, said first layer being made of a fibre-reinforced polymer, the first layer being perforated or micro-perforated,
- a second layer (8) made up of a metal fabric,
- a third layer formed of tapes (10) made of a fibre-reinforced polymer, said tapes extending mainly in the longitudinal direction of the strip of material and being spaced apart from one another in the transverse direction of the strip, the tapes (10) thus forming longitudinal reinforcing crenellations, the first layer (6) not having perforations (70) or micro-perforations (60) next to said tapes,
and **in that** the folded end portion(s) (4) of the strip do not have perforations (70) or micro-perforations (60) in the first layer (6) and do not have a third layer (10) .

5. Internal wall according to either of Claims 3 and 4, **characterized in that** the folded end portion(s) (4) are folded on the opposite side from the first layer (6).

6. Internal wall according to either of Claims 3 and 4, **characterized in that** the folded end portion(s) (4) are folded on the same side as the first layer (6).

7. Internal wall according to one of Claims 3 to 6, **characterized in that** the first layer (6) of the strip does not have perforations (70) or micro-perforations (60) in its folded end portion(s) (4).

8. Aircraft nacelle comprising an air intake having an internal wall according to one of Claims 1 to 7.

9. Aircraft propulsion unit comprising a nacelle according to Claim 8.

10. Aircraft comprising at least one propulsion unit according to Claim 9.
